(19) Europäisches Patentamt
European Patent Office
Office européen des brevets

(11) EP 0 664 321 B1

(12) EUROPÄISCHE PATENTSCHRIFT

(45) Veröffentlichungstag und Bekanntmachung des Hinweises auf die Patenterteilung:
**16.04.2003 Patentblatt 2003/16**

(51) Int Cl.[7]: **C08L 69/00**, C08K 5/00
// C08L69:00, C08K5:053, C08K5:435

(21) Anmeldenummer: **95100309.4**

(22) Anmeldetag: **11.01.1995**

(54) **Strahlenfeste Polycarbonate**

Polycarbonates stabilized against radiation

Polycarbonates résistant à radiation

(84) Benannte Vertragsstaaten:
**DE FR GB IT SE**

(30) Priorität: **24.01.1994 DE 4401928**
**04.11.1994 DE 4439333**

(43) Veröffentlichungstag der Anmeldung:
**26.07.1995 Patentblatt 1995/30**

(73) Patentinhaber: **BAYER AG**
**51368 Leverkusen (DE)**

(72) Erfinder:
- **Fennhoff, Gerhard, Dr.**
  **D-47877 Willich (DE)**
- **Hufen, Ralf**
  **D-47239 Duisburg (DE)**
- **Kircher, Klaus, Dr.**
  **D-51375 Leverkusen (DE)**
- **Ebert, Wolfgang, Dr.**
  **D-47800 Krefeld (DE)**

(56) Entgegenhaltungen:
**EP-A- 0 535 464**
**US-A- 4 218 357**
**US-A- 5 102 934**
**US-A- 5 214 078**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 664 321 B1

**Beschreibung**

Gegenstand der vorliegenden Erfindung sind thermoplastische, aromatische Polycarbonate auf Basis von Diphenolen der Formel (I)

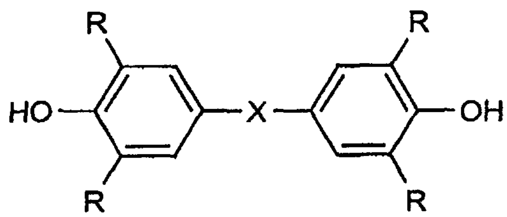

(I)

worin

X eine Einfachbindung, $C_1$-$C_5$-Alkylen, $C_2$-$C_5$-Alkyliden, $C_5$-$C_6$-Cycloalkylen, $C_5$-$C_{12}$-Cycloalkyliden, -S-, -O-,

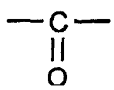

,

-$SO_2$-, -SO- und ein Rest der Formel

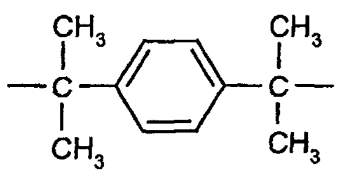

ist und

R H und/oder $C_1$-$C_3$-Alkyl ist

mit einem Gehalt an Sulfonamiden der Formel (II)

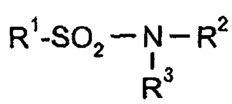

(II)

worin

$R^1$ ein $C_1$-$C_8$-Alkyl, $C_5$-$C_6$-Cycloalkyl oder ein $C_6$-$C_{10}$-Arylrest ist,

$R^2$ und $R^3$ gleich oder verschieden und H, ein $C_1$-$C_8$-Alkyl, Phenyl oder ein-$C_5$-$C_6$-Cycloalkyl sind,

in Mengen von 0,001 Gew.-% bis 5 Gew.-%, vorzugsweise von 0,005 Gew.-% bis 1 Gew.-% und insbesondere von 0,01 Gew.-% bis 0,8 Gew.-%, bezogen jeweils auf 100 Gew.-% an aromatischem Polycarbonat, und mit einem Gehalt an aliphatischen oder cycloaliphatischen Mono- oder Polyalkoholen oder deren Derivaten in Mengen von 0.001 Gew.-% bis 2 Gew.-%, vorzugsweise von 0.001 bis 1.5 Gew.-%, bezogen jeweils wiederum auf 100 Gew.-% an aromatischem Polycarbonat.

Die erfindungsgemäßen Polycarbonate sind durch die Zusätze gegen $\gamma$-Strahlung stabilisiert und somit für medizinische Anwendungen in vielfacher Weise geeignet, insbesondere zur Herstellung von Geräten oder Geräteteilen, die jeweils vor oder nach Gebrauch durch ionisierende Strahlung sterilisiert werden können, ohne dass eine übermäßige Vergilbung der Geräte auftritt.

Gegenstand der vorliegenden Erfindung ist somit auch die Verwendung der erfindungsgemäß stabilisierten Polycarbonate zur Herstellung medizinischer Geräte oder Geräteteile von medizinischen Geräten.

Thermoplastische, aromatische Polycarbonate im Sinne der vorliegenden Erfindung sind sowohl Homopolycarbonate als auch Copolycarbonate; die Polycarbonate können in bekannter Weise linear oder verzweigt sein.

Ein Teil, bis zu 80 Mol-%, vorzugsweise von 20 Mol-% bis zu 50 Mol-% der Carbonat-Gruppen in den erfindungsgemäß geeigneten Polycarbonaten können durch aromatische Dicarbonsäureester-Gruppen ersetzt sein. Derartige Polycarbonate, die sowohl Säurereste der Kohlensäure als auch Säurereste von aromatischen Dicarbonsäuren in die Molekülkette eingebaut enthalten, sind, genau bezeichnet, aromatische Polyestercarbonate. Sie sollen der Einfachheit halber in vorliegender Anmeldung unter dem Oberbegriff der thermoplastischen, aromatischen Polycarbonate subsummiert werden.

Die Herstellung der erfindungsgemäß zu stabilisierenden Polycarbonate erfolgt in bekannter Weise aus Diphenolen, Kohlensäurederivaten, gegebenenfalls Kettenabbrechern und gegebenenfalls Verzweigern, wobei zur Herstellung der Polyestercarbonate ein Teil der Kohlensäurederivate durch aromatische Dicarbonsäuren oder Derivate der Dicarbonsäuren ersetzt werden, und zwar je nach Maßgabe der in den aromatischen Polycarbonaten zu ersetzenden Carbonatstruktureinheiten durch aromatische Dicarbonsäureesterstruktureinheiten.

Einzelheiten der Herstellung von Polycarbonaten sind in Hunderten von Patentschriften seit etwa 40 Jahren niedergelegt. Beispielhaft sei hier nur auf "Schnell", Chemistry and Physics of Polycarbonates", Polymer Reviews, Volume 9, Interscience Publishers, New York, London, Sydney 1964, auf D.C. PREVORSEK, B.T. DEBONA and Y. KESTEN, Corporate Research Center, Allied Chemical Corporation, Morristown, New Jersey 07960, "Synthesis of Poly(ester Carbonate) Copolymers" in Journal of Polymer Science, Polymer Chemistry Edition, Vol. 18, 75-90 (1980), auf D. Freitag, U. Grigo, P.R. Müller, H. Nonvertue', BAYER AG, "Polycarbonates" in Encyclopedia of Polymer Science and Engineering, Volume 11, Second Edition, 1988, Seiten 648-718 und schließlich auf Dres. U. Grigo, K. Kircher und P.R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117-299 verwiesen.

Die thermoplastischen Polycarbonate einschließlich der thermoplastischen, aromatischen Polyestercarbonate haben mittlere Molekulargewichte $\overline{M}_w$ (ermittelt durch Messung der relativen Viskosität bei 25°C in $CH_2Cl_2$ und einer Konzentration von 0,5 g pro 100ml $CH_2Cl_2$) von 12 000 bis 120 000, vorzugsweise von 18 000 bis 80 000 und insbesondere von 22 000 bis 60 000.

Für die Herstellung der erfindungsgemäß zu stabilisierenden Polycarbonate geeignete Diphenole sind beispielsweise Hydrochinon, Resorcin, Dihydroxydiphenyle, Bis-(hydroxyphenyl)-alkane, Bis(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, $\alpha,\alpha'$-Bis-(hydroxyphenyl)-diisopropylbenzole, sowie deren kernalkylierte Verbindungen.

Bevorzugte Diphenole sind 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-p-diisopropylbenzol und 1,1-Bis-(4-hydroxyphenyl)-3,3,5-trimethylcyclohexan.

Besonders bevorzugte Diphenole sind 2,2-Bis-(4-hydroxyphenyl)-propan, 1,1-Bis-(4-hydroxyphenyl)-cyclohexan und 1,1-Bis-(4-hydroxyphenyl)-3,3,5-trimethylcyclohexan.

Diese und weitere geeignete Diphenole sind z.B. in den US-PS 3 028 635, 2 999 835, 3 148 172, 2 991 273, 3 271 367, 4 982 014 und 2 999 846, in den deutschen Offenlegungsschriften 1 570 703, 2 063 050, 2 036 052, 2 211 956 und 3 832 396, der französischen Patentschrift 1 561 518, in der Monographie "H. Schnell, Chemistry and Physics of Polycarbonates, Interscience Publishers, New York 1964" sowie in den japanischen Offenlegungsschriften 62039/1986, 62040/1986 und 105550/1986 beschrieben.

Im Falle der Homopolycarbonate wird nur ein Diphenol eingesetzt, im Falle der Copolycarbonate werden mehrere Diphenole eingesetzt.

Geeignete Kettenabbrecher sind sowohl Monophenole als auch Monocarbonsäuren. Geeignete Monophenole sind Phenol selbst und Alkylphenole wie Kresole, p-tert.-Butylphenol, p-n-Octylphenol, p-iso-Octylphenol, p-n-Nonylphenol und p-iso-Nonylphenol.

Geeignete Monocarbonsäuren sind Benzoesäure, Alkylbenzoesäuren und Halogenbenzoesäuren.

Bevorzugte Kettenabbrecher sind die Phenole der Formel (III)

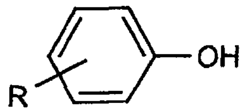

(III)

worin

R ein verzweigter oder unverzweigter $C_8$- und/oder $C_9$-Alkylrest ist.

Die Menge an einzusetzendem Kettenabbrecher beträgt 0,5 Mol-% bis 10 Mol-%, bezogen auf Mole an jeweils eingesetzten Diphenolen. Die Zugabe der Kettenabbrecher kann vor, während oder nach der Phosgenierung erfolgen.

Geeignete Verzweiger sind die in der Polycarbonatchemie bekannten tri- oder mehr als trifimktionellen Verbindungen, insbesondere solche mit drei oder mehr als drei phenolischen OH-Gruppen.

Geeignete Verzweiger sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis-[4,4-bis-(4-hydroxyphenyl)-cyclohexyl]-propan, 2,4-Bis-(4-hydroxyphenyl-isopropyl)-phenol, 2,6-Bis-(2-hydroxy-5'-methyl-benzyl)-4-methylphenol, 2-(4-Hydroxyphenyl)-2-(2,4-dihydroxyphenyl)-propan, Hexa-(4-(4-hydroxyphenyl-isopropyl)-phenyl)-orthoterephthalsäureester, Tetra-(4-hydroxyphenyl)-methan, Tetra-(4-(4-hydroxyphenyl-isopropyl)-phenoxy)-methan und 1,4-Bis-(4',4''-dihydroxytriphenyl)-methyl)-benzol sowie 2,4-Dihydroxybenzoesäure, Trimesinsäure, Cyanurchlorid und 3,3-Bis-(3-methyl-4-hydroxyphenyl)-2-oxo-2,3-dihydroindol.

Die Menge der gegebenenfalls einzusetzenden Verzweiger beträgt 0,05 Mol-% bis 2 Mol-%, bezogen wiederum auf Mole an jeweils eingesetzten Diphenolen.

Die Verzweiger können entweder mit den Diphenolen und den Kettenabbrechern in der wäßrig alkalischen Phase vorgelegt werden, oder in einem organischen Lösungsmittel gelöst vor der Phosgenierung zugegeben werden.

Alle diese Maßnahmen zur Herstellung der Polycarbonate sind dem Fachmann geläufig.

Für die Herstellung der Polyestercarbonate geeignete aromatische Dicarbonsäuren sind beispielsweise Orthophthalsäure, Terephthalsäure, Isophthalsäure, tert.-Butylisophthalsäure, 3,3'-Diphenyldicarbonsäure, 4,4'-Diphenyldicarbonsäure, 4,4'-Benzophenondicarbonsäure, 3,4'-Benzophenondicarbonsäure, 4,4'-Diphenyletherdicarbonsäure, 4,4'-Diphenylsulfondicarbonsäure, 2,2-Bis-(4-carboxyphenyl)-propan, Trimethyl-3-phenylindan-4,5'-dicarbonsäure.

Von den aromatischen Dicarbonsäuren werden besonders bevorzugt die Terephthalsäure und/oder Isophthalsäure eingesetzt.

Derivate der Dicarbonsäuren sind die Dicarbonsäuredihalogenide und die Dicarbonsäuredialkylester, insbesondere die Dicarbonsäuredichloride und die Dicarbonsäuredimethylester.

Der Einsatz der Carbonatgruppen durch die aromatischen Dicarbonsäureestergruppen erfolgt im wesentlichen stöchiometrisch und auch quantitativ, so dass das molare Verhältnis der Reaktionspartner sich auch im fertigen Polyestercarbonat wiederfindet. Der Einbau der aromatischen Dicarbonsäureestergruppen kann sowohl statistisch als auch blockweise erfolgen.

Bevorzugte Herstellungsweisen der erfindungsgemäß zu stabilisierenden Polycarbonate, einschließlich der Polyestercarbonate sind das bekannte Grenzflächenverfahren und das bekannte Schmelzumesterungsverfahren.

Im ersten Fall dient als Kohlensäurederivat vorzugsweise Phosgen, im letzteren Fall vorzugsweise Diphenylcarbonat.

Katalysatoren, Lösungsmittel, Aufarbeitung, Reaktionsbedingungen etc. sind in beiden Fällen hinreichend beschrieben und bekannt.

Bevorzugte Reste $R^1$, $R^2$ und $R^3$ der Formel (II) sind Phenyl, Methyl, Ethyl, Propyl, Isopropyl, n-Butyl, Isobutyl, t-Butyl und Cyclohexyl.

Geeignete Sulfonamide der Formel (II) sind beispielsweise Triphenylsulfonamid, N,N-Diphenyl-methyl-sulfonamid, N-Methyl-N-phenyl-phenylsulfonamid und N,N-Dimethyl-phenyl-sulfonamid.

Die als Zusätze geeigneten aliphatischen oder cycloaliphatischen Mono- oder Polyalkohole sind vorzugsweise $C_1$-$C_{20}$-Monoalkohole, aliphatische $C_2$-$C_{20}$-Dialkohole, aliphatische $C_3$-$C_{20}$-Trialkohole und aliphatische $C_4$-$C_{20}$-Tetraalkohole, cycloaliphatische $C_3$-$C_{12}$-Monoalkohole und cycloaliphatische $C_3$-$C_{12}$-Dialkohole.

Diese Mono- und Polyalkohole sind literaturbekannt (siehe beispielsweise Houben-Weyl, "Methoden der organischen Chemie", Band 6/1a/1, "Alkohole I, Band 6/1a/2, "Alkohole II" und Band 6/1b, "Alkohole III", Georg Thieme Verlag Stuttgart-New York, 1979, 1980 und 1984).

Bevorzugte Monoalkohole sind Dodecanol, Hexadecanol-(1), Hexadecanol-(2), Stearylalkohol, Octadecanol und Eicosanol.

Bevorzugte Polyalkohole sind Diole, Triole, Tetraole, Pentaole und Hexaole, insbesondere Diole der Formel (IV)

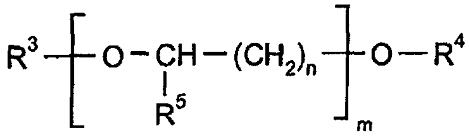

(IV)

worin $R^3 = R^4 = H$, $R^5$ H oder $C_1$-$C_4$-Alkyl, n eine ganze Zahl von 1 bis 36 und m eine ganze Zahl von 1 bis 1500, vorzugsweise von 2 bis 1200 und insbesondere von 3 bis 1000 sind.

Beispiele dafür sind Ethlenglykol, 1,2-Propandiol, 1,3-Propandiol, 1,2-Butandiol, 1,3-Butandiol, 1,4-Butandiol, 2,3-Butandiol, 1,2-Pentandiol, 1,5-Pentandiol, 2,4-Pentandiol, 1,2-Hexandiol, 1,6-Hexandiol, 3-Methyl-1,5-pentandiol, 2,5-Hexandiol, 1,2-Cyclohexandiol, 1,4-Cyclohexandiol, Cyclohexyl-1,4-dimethanol, 2-Methyl-2,4-pentandiol, 1,8-Octandiol, 1,10-Decandiol, 1,2-Undecandiol, 1,2-Dodecandiol, 1,12-Dodecandiol, 1,2-Hexadecandiol, 1,2,5-Pentantriol, 1,2,3-Hexantriol, 1,2,6-Hexantriol, 2-(Hydroxymethyl)-2-methyl-1,3-propandiol und 2,3,4,5,6,7-Octanhexaol.

Geeignete Derivate der erfindungsgemäß geeigneten Mono- oder Polyalkohole sind deren Ether, Carbonsäureester, Acetale, Alkylcarbonate, Epoxide, Urethane, Phosphatester, Phosphonatester, Phosphorigester, Phosphonigester und Siloxane.

Auch diese Derivate sind literaturbekannt oder nach literaturbekannten Verfahren (siehe die entsprechenden Bände von Houben-Weyl, "Methoden der organischen Chemie", Georg Thieme Verlag) erhältlich.

Bevorzugte Derivate sind die Ether, Carbonsäureester, Acetale und Alkylcarbonate der Mono- bzw. Polyalkohole; Beispiele dafür sind Diethylenglykol, Diethylenglykoldiethylether, Dipropylenglykol, Tripropylenglykol, 1,3-Diethoxy-2-propanol, 3,3'-Oxibis-(1,2-propandiol), 2,2'-Oxibisbutan, die Alkylester der Undecansäure, Dodecansäure, Hexadecansäure, Stearinsäure und Dodecansäure, Glycerinmonostearat, Glycerindistearat, Glycerintristearat, 1,1 Bis-(2,3-dioctadecanyloxy-propyloxy)-hexadecan, 2,2-Dicyclohexyloxypropan, Acetoxy-(4-(2-tetrahydropyranyloxy)-pentyloxy)-methan, Acetoxy-dodecyloxymethan, Acetoxy-(3-(2-methyl-1,3-dioxolan-2-yl)-propyloxy)-methan, Ethylencarbonat, Dimethylcarbonat, Diethylcarbonat, Dipropylcarbonat, Diisopropylcarbonat und Dineopentylcarbonat.

Ganz besonders gut geeignet sind solche der Formel (IV)

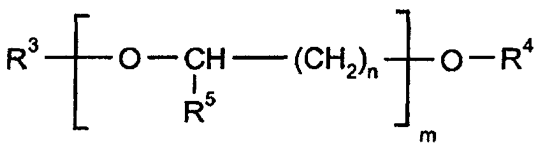

(IV)

worin

$R^3$ und $R^4$ gleich oder verschieden sein können und $C_1$- bis $C_{30}$-Alkyl, und zwar verzweigt oder unverzweigt, oder Acyl, Silyl und/oder Pyranyl,

$R^5$ H oder $C_1$- bis $C_4$-Alkyl sein können,

n eine ganze Zahl von 1 bis 36 und

m eine ganze Zahl von 1 bis 1500, vorzugsweise von 2 bis 1200 und insbesondere von 3 bis 1000, sein können.

Die Verbindungen der Formel (IV) können bevorzugt Molekulargewichte zwischen 106 g/Mol und 100000 g/Mol, besonders bevorzugt zwischen 150 g/Mol und 12000 g/Mol, ganz besonders bevorzugt zwischen 500 g/Mol und 10000 g/Mol aufweisen.

Die Einarbeitung der erfindungsgemäß einzusetzenden Sulfonamide und gegebenenfalls der erfindungsgemäß einzusetzenden Mono- oder Polyalkohole oder deren Derivate in die Polycarbonate kann sowohl simultan als auch sukzessive bei Temperaturen zwischen 260 und 380°C über die Schmelze der Polycarbonate erfolgen oder über die Lösung der Polycarbonate in den bekannten Lösungsmitteln wie $CH_2Cl_2$ und/oder Chlorbenzol, und anschließendes Ausdampfen des Lösungsmittels in bekannter Weise erfolgen.

Gegenstand der vorliegenden Erfindung ist somit auch ein Verfahren zur Herstellung der erfindungsgemäß stabilisierten Polycarbonate, das dadurch gekennzeichnet ist, dass man die Sulfonamide der Formel (II)

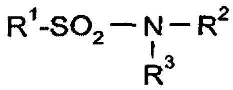

(II)

worin

$R^1$ ein $C_1$-$C_8$-Alkyl, $C_5$-$C_6$-Cycloalkyl oder ein $C_6$-$C_{10}$-Arylrest ist,

$R^2$ und $R^3$ gleich oder verschieden und H, ein $C_1$-$C_{18}$-Alkyl, Phenyl oder ein $C_5$-$C_6$-Cycloalkyl sind,

und die aliphatischen oder cycloaliphatischen Mono- oder Polyalkohole oder deren Derivate mit Polycarbonaten bei Temperaturen zwischen 260 und 380°C in den dafür üblichen Mischaggregaten wie beispielsweise Kneter oder Extruder mischt, oder dass man die Sulfonamide der Formel (II) und die aliphatischen oder cycloaliphatischen Mono- oder Polyalkohole oder deren Derivate mit Polycarbonaten in den bekannten Lösungsmitteln wie $CH_2Cl_2$ und/oder Chlorbenzol löst und die so erhaltenen Mischungen der Sulfonamide der Formel (II) und der aliphatischen oder cycloaliphatischen Mono- oder Polyalkohole oder deren Derivate mit den Polycarbonaten durch anschließendes Ausdampfen des Lösungsmittels in bekannter Weise isoliert.

Geeignete Geräte zur Herstellung der erfindungsgemäß stabilisierten Polycarbonate sind im Falle der Einarbeitung über die Polycarbonatschmelze Kneter oder Extruder, im Falle der Einarbeitung über die Polycarbonatlösung Kessel mit Misch- oder Rührvorrichtungen.

Die Bestrahlung von Polycarbonatformteilen mittels ionisierender Strahlung wie γ-Strahlen oder Elektronenstrahlen erfolgt, um Gegenstände wie Dialysatoren für die Blutwäsche, Einwegspritzen etc. vor ihrem medizinischen Einsatz zu sterilisieren. Dabei tritt stets irreversible Schädigung z.B. in Form von Vergilbung des Polykondensats auf. Um diese Schädigung zu verringern bzw. zu vermeiden, müssen vor der Bestrahlung die Polykondensate stabilisiert werden.

Gemäß US-PS 4 007 150 bzw. US-PS 4 041 003 ist der Zusatz von Perfluoralkansulfonsäureamiden als Entformungsmittel zu Polycarbonaten bekannt.

Gemäß US-PS 4 477 637 ist der Zusatz von Sulfonamiden zu speziellen alkylierten Polycarbonaten bekannt. Die Sulfonamide dienen als Flammschutzmittel.

Gemäß US-PS 4 471 104 sind Polycarbonate mit Sulfonanilidendgruppen bekannt. Diese Polycarbonate sind durch verbesserte Flammwidrigkeit ausgezeichnet.

Gemäß US-PS 4 503 213 sind Polycarbonate mit N-Alkyl-perflfüoralkylsulfonamid-Endgruppen bekannt, die eine verbesserte Verarbeitbarkeit haben.

Gemäß EP-O 0 071 125 sind flammwidrige Polycarbonate mit einkondensierten Bissulfonylamidstruktureinheiten bekannt.

Gemäß US-PS 4 880 855 sind farbstabile Polycarbonate bekannt, die unter anderem Thiole, Thioether, cyclische Thioether und Sulfone zugesetzt enthalten.

Demgegenüber haben die erfindungsgemäß zuzusetzenden Sulfonamide den technischen Vorteil bei hohen Verarbeitungstemperaturen stabil zu bleiben und keine verarbeitungsbedingten Vergilbungen zu erzeugen bei gleichzeitig ausgezeichneter farbstabilisierender Wirkung gegenüber ionisierender Strahlung.

Gemäß US-PS 5 214 078 sind strahlenresistente Polycarbonate bekannt, die Polyetherpolyole und aromatische Disulfide enthalten. Demgegenüber haben die erfindungsgemäß zuzusetzenden Sulfonamide aufgrund ihrer wesentlich höheren Thermostabilität ein deutlich größeres Verarbeitungsfenster hinsichtlich der Höhe der Verarbeitungstemperatur und der Farbstabilität in der Schmelze bei Maschinenstillständen während des Verspritzens. Dadurch fällt beim Anfahren der jeweiligen Spritzgußmaschine nach einem Stehen in der Schmelze nur sehr wenig Ausschuß an.

Gemäß EP-A-0 572 889 sind ebenfalls strahlenresistente Polycarbonate bekannt, die eine Vielzahl von Schwefelverbindungen und gegebenenfalls Alkohole oder deren Derivate als Stabilisatoren enthalten. Demgegenüber haben die erfindungsgemäß zuzusetzenden Sulfonamide die gleichen Vorteile wie gegenüber den gemäß der US-PS

5 214 078 beschriebenen aromatischen Disulfiden.

Durch diesen Stand der Technik sind die erfindungsgemäß stabilisierten Polycarbonate somit weder vorbeschrieben noch nahegelegt.

Vielmehr war es überraschend, dass die Verbindungen der Formel (II), insbesondere in Kombination mit Mono- oder mit Polyalkoholen oder mit deren Derivaten eine ausgezeichnete stabilisierende Wirkung auf Polycarbonate oder auf Polyestercarbonate gegen den Einfluß von γ-Strahlen dahingehend ausüben, dass sie das jeweils zu stabilisierende Polykondensat deutlich weniger stark vergilben lassen als die breits bekannten Stabilisatorsysteme des derzeitigen Stands der Technik, was durch Bestimmen der Differenz des Yellowness Index der erfindungsgemäßen Polykondensatmischung nach und vor γ-Bestrahlung gezeigt werden kann.

Die erfindungsgemäß gegen γ-Strahlen stabilisierten Polycarbonate können noch die üblichen Additive wie Thermostabilisatoren, UV-Absorber, Fließmittel, Entformungsmittel, Weichmacher, Antistatika, Flammschutzmittel und/oder Farbstoffe enthalten, und für spezielle Anwendungen auch Füllstoffe wie beispielsweise Glasfasern oder Glaskugeln. Die Einarbeitung erfolgt in den für Polycarbonate üblichen Mengen unter üblichen Bedingungen und auf üblichen Maschinen. Die Einarbeitung kann vor, während oder nach der erfindungsgemäßen Stabilisierung durch die Sulfonamide und gegebenenfalls Alkohole bzw. deren Derivate erfolgen.

Die Verarbeitung der erfindungsgemäß stabilisierten Polycarbonate zu beliebigen Formteilen insbesondere zu medizinischen Geräten erfolgt auf bekannten Spritzgußmaschinen und Extrusionsmaschinen.

Der Einsatz der Formkörper aus den erfindungsgemäß stabilisierten Polycarbonaten kann außer in der Medizin auch in Bereichen mit Lebensmittelkontakten, also als Verpackungsmaterialien jeglicher Form, sowie in allen übrigen für Polycarbonate üblichen Anwendungsbereichen erfolgen.

## Beispiele

Die relativen Lösungsviskositäten (ηrel) der Polykondensate wurden bei 25°C bestimmt. Dazu wurden 0,500 g des jeweiligen Kondensats in 100 ml Dichlormethan gelöst.

### Herstellen der Polycarbonatmischungen mit den Stabilisatoren

Die in der nachfolgenden Tabelle angegebenen Beispiele der Mischungen von Polycarbonaten mit verschiedenen Stabilisatoren für die γ-Bestrahlung wurden auf einem Zweiwellenextruder bei 300°C Massetemperatur hergestellt. Aus den so erhaltenen Mischungen wurden Farbmusterplättchen (Größe: 60 mm x 40 mm x 4 mm) bei 300°C und 320°C Verarbeitungstemperatur hergestellt. Diese wurden mit 3MRad γ-Strahlung sterilisiert.

Die Zusammensetzungen der Mischungen und die experimentellen Befunde sind in der nachfolgenden Tabelle zusammengestellt.

### Ergebnisse

| Beispiel | Additiv | Menge Additiv in Gew.-% | Y.I. nach 300°C Verarbeitungstemperatur | Y.I. nach 320°C Verarbeitungstemperatur | ΔY.I. (Produkt der 320°C Verarbeitung) |
|---|---|---|---|---|---|
| 1: PC + Additiv | N,N-Dimethyl-(4-methylphenyl)-sulfonamid<br>PPG | 0,5<br>0,75 | 4,0 | 4,1 | 11,3 |
| 2: PC + Additiv | N-Methylbenzolsulfonamid<br>PPG | 0,5<br>0,75 | 3,9 | 4,1 | 10,7 |
| Vergleich | | | | | |
| 1:PC (reextrudiert | - | - | 6,1 | 6,9 | 22,1 |
| 2: PC + Additiv | PPG | 0,75 | 4,0 | 4,1 | 13,2 |
| 3: PC + Additiv | Dioctadecyldisulfid<br>PPG | 0,5<br>0,75 | 6,5 | 9,0 | 5,0 |

Y.I. Yellowness Index / ΔY.I. = Y.I. 10 Tage nach γ-Bestrahlung - Y.I. vor γ-Bestrahlung

PC = Polycarbonat aus Bisphenol A und Bischlorkohlensäureester von Bisphenol A mit einer relativen Lösungsviskisität von 1,292

PPG = Polypropylenglykol (mit dem Molekulargewicht 2000 g/mol)

**Patentansprüche**

**1.** Thermoplastische, aromatische Polycarbonate auf Basis von Diphenolen der Formel (I)

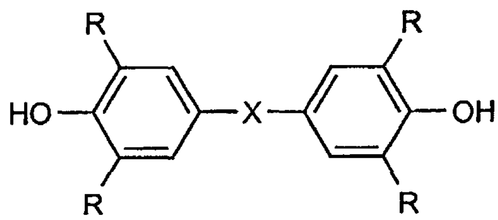

(I)

worin

X eine Einfachbindung, $C_1$-$C_5$-Alkylen, $C_2$-$C_5$-Alkyliden, $C_5$-$C_6$-Cycloalkylen, $C_5$-$C_{12}$-Cycloalkyliden, -S-, -O-,

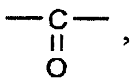

-$SO_2$-, -SO- und ein Rest der Formel

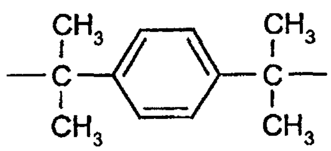

ist und

R H und/oder $C_1$-$C_3$-Alkyl ist,

mit einem Gehalt an Sulfonamiden der Formel (II)

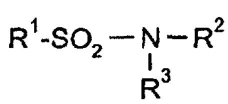

(II)

worin

$R^1$ ein $C_1$-$C_8$-Alkyl, $C_5$-$C_6$-Cycloalkyl oder ein $C_6$-$C_{10}$-Arylrest ist,

$R^2$ und $R^3$ gleich oder verschieden und H, ein $C_1$-$C_8$-Alkyl, Phenyl oder ein $C_5$-$C_6$-Cycloalkyl sind,

in Mengen von 0,001 Gew.-% bis 5 Gew.-% bezogen jeweils auf 100 Gew.-% an aromatischem Polycarbonat, und mit einem Gehalt an aliphatischen oder cycloaliphatischen Mono- oder Polyalkoholen oder deren Derivaten in Mengen von 0.001 Gew.-% bis 2 Gew.-% bezogen jeweils wiederum auf 100 Gew.-% an aromatischem Polycarbonat.

**2.** Polycarbonate gemäß Anspruch 1, mit einem Gehalt an Sulfonamiden der Formel (II) in Mengen von 0,005 Gew.-% bis 1 Gew.-%.

**3.** Polycarbonate gemäß Anspruch 1, mit einem Gehalt an aliphatischen oder cycloaliphatischen Mono- oder Polyalkoholen oder deren Derivaten in Mengen von 0,001 Gew.-% bis 1,5 Gew.-%.

4. Polycarbonate gemäß Anspruch 1, **dadurch gekennzeichnet, dass** die aliphatischen Alkohole aliphatische $C_1$-$C_{20}$-Monoalkohole, aliphatische $C_2$-$C_{20}$-Dialkohole, aliphatische $C_3$-$C_{20}$-Trialkohole oder aliphatische $C_4$-$C_{20}$-Tetraalkohole sind und die cycloaliphatischen Alkohole $C_3$-$C_{12}$-Monoalkohole oder C $_3$-$C_{12}$-Dialkohole sind.

5. Verfahren zur Herstellung der Polycarbonate des Anspruchs 1, **dadurch gekennzeichnet, dass** man die Sulfonamide der Formel (II) des Anspruchs 1 und die aliphatischen oder cycloaliphatischen Mono- oder Polyalkohole oder deren Derivate in die Polycarbonate bei Temperaturen zwischen 260 und 380°C über die Schmelze der Polycarbonate in den dafür üblichen Mischaggregaten einarbeitet, oder dass man die Sulfonamide der Formel (II) und die aliphatischen oder cycloaliphatischen Mono- oder Polyalkohole oder deren Derivate mit Polycarbonaten in den für Polycarbonate üblichen Lösungsmitteln wie $CH_2Cl_2$ und/oder Chlorbenzol löst und die so erhaltenen Mischungen der Sulfonamide der Formel (II) und der aliphatischen oder cycloaliphatischen Mono- oder Polyalkohole oder deren Derivate mit den Polycarbonaten durch anschließendes Ausdampfen des Lösungsmittels in bekannter Weise isoliert.

6. Verwendung der Polycarbonate der Ansprüch1 1 bis 4 zur Herstellung von medizinischen Geräten oder von Teilen von medizinischen Geräten.

**Claims**

1. Thermoplastic aromatic polycarbonates based on diphenols of the formula (I)

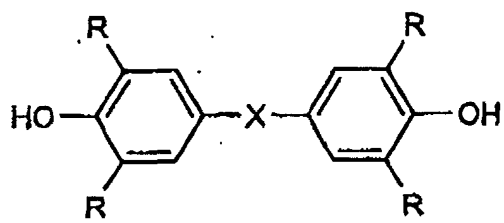

(I)

wherein

X is a single bond, $C_1$-$C_5$ alkylene, $C_2$-$C_5$ alkylidene, $C_5$-$C_6$ cycloalkylene, $C_5$-$C_{12}$ cycloalkylidene, -S-, -O-,

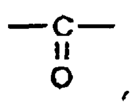

-$SO_2$-, -SO- and a residue of the formula

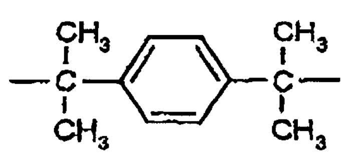

:

and
R is H and/or $C_1$-$C_3$ alkyl

with a content of sulfonamides of the formula (II)

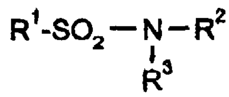

(II)

wherein

$R^1$ is a $C_1$-$C_8$ alkyl, $C_5$-$C_6$ cycloalkyl or a $C_6$-$C_{10}$ aryl residue,
$R^2$ and $R^3$ are identical or different and are H, a $C_1$-$C_8$ alkyl, phenyl or a $C_5$-$C_6$ cycloalkyl,

in amounts of from 0.001 wt.% to 5 wt.% based in each case on 100 wt.% of aromatic polycarbonate and with a content of aliphatic or cycloaliphatic mono- or polyalcohols or derivatives thereof in amounts from 0.001 wt.% to 2 wt.%, again based in each case on 100 wt.% of aromatic polycarbonate.

2. Polycarbonates according to Claim 1, with a content of sulfonamides of the formula (II) in amounts of from 0.005 wt.% to 1 wt.%.

3. Polycarbonates according to Claim 1, with a content of aliphatic or cycloaliphatic mono- or polyalcohols or derivatives thereof in amounts of from 0,001 wt.% to 1.5 wt.%.

4. Polycarbonates according to Claim 1, **characterized in that** the aliphatic alcohols are $C_1$-$C_{20}$ monoalcohols, aliphatic $C_2$-$C_{20}$ dialcohols, aliphatic $C_3$-$C_{20}$ trialcohols or aliphatic $C_4$-$C_{20}$ tetraalcohols and the cycloaliphatic alcohols are $C_3$-$C_{12}$ monoalcohols or $C_3$-$C_{12}$ dialcohols.

5. Method for producing the polycarbonates of Claim 1, **characterized in that** the sulfonamides of the formula (II) of Claim 1 and the aliphatic or cycloaliphatic mono- or polyalcohols or derivatives thereof are incorporated into the polycarbonates, via the melt of the polycarbonates, at temperatures between 260 and 380°C in the mixing devices conventional for this, or **in that** the sulfonamides of the formula (II) and the aliphatic or cycloaliphatic mono- or polyalcohols or derivatives thereof are dissolved together with polycarbonates in the solvents conventional for polycarbonates, such as $CH_2Cl_2$ and/or chlprobenzene, and the resultant mixtures, of the sulfonamides of the formula (II) and the aliphatic or cycloaliphatic mono- or polyalcohols or derivatives thereof with the polycarbonates are isolated by subsequent evaporation of the solvent in a known manner.

6. Use of the polycarbonates of Claims 1 to 4 for producing medical equipment or parts of medical equipment.

**Revendications**

1. Polycarbonates aromatiques thermoplastiques à base de diphénols de formule (I)

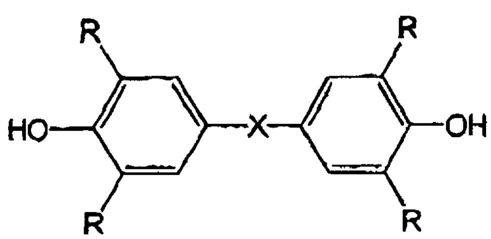

(I)

dans laquelle

X est une liaison simple, un reste alkylène en $C_1$-$C_5$, alkylidène en $C_2$-$C_5$, cycloalkylène en $C_5$-$C_6$, cycloalkylidène en $C_5$-$C_{12}$, -S-, -O-,

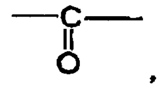

$-SO_2-$, -SO- et un reste de formule

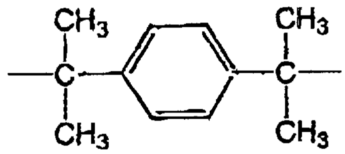

et

R est H et/ou un alkyle en $C_1$-$C_3$

avec une quantité de sulfonamides de formule (II)

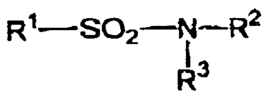

(II)

dans laquelle $R^1$ est un reste alkyle en $C_1$-$C_8$, cycloalkyle en $C_5$-$C_6$ ou aryle en $C_6$-$C_{10}$,
$R^2$ et $R^3$ sont identiques ou différents et sont H, un alkyle en $C_1$-$C_8$, phényle ou un cycloalkyle en $C_5$-$C_6$,

en quantités de 0.001% en poids à 5% en poids, rapporté dans chaque cas à 100% en poids du polycarbonate aromatique et avec une quantité de mono- ou polyols aliphatiques ou cycloaliphatiques ou leurs dérivés selon des quantités de 0,001 à 2% en poids, de nouveau rapporté dans chaque cas à 100% en poids du polycarbonate aromatique.

**2.** Polycarbonates selon la revendication 1, avec une quantité de sulfonamides de formule (II) en quantités de 0,005% en poids à 1% en poids.

**3.** Polycarbonates selon la revendication 1, avec une quantité de mono- ou polyols aliphatiques ou cycloaliphatiques ou de leurs dérivés en quantités de 0,001 % en poids à 1,5% en poids.

**4.** Polycarbonates selon la revendication 1, **caractérisés en ce que** les alcools aliphatiques sont des monoalcools aliphatiques en $C_1$-$C_{20}$, des diols aliphatiques en $C_2$-$C_{20}$, des triols aliphatiques en $C_3$-$C_{20}$ ou des tétraols aliphatiques en $C_3$-$C_{20}$ et les alcools cycloaliphatiques sont des monoalcools en $C_3$-$C_{12}$ ou des diols en $C_3$-$C_{12}$.

**5.** Procédé de préparation des polycarbonates selon la revendication 1, **caractérisé en ce qu'**on incorpore les sulfonamides de formule (II) de la revendication 1 et les mono- ou polyols aliphatiques ou cycloaliphatiques ou leurs dérivés, dans des polycarbonates fondus à des températures entre 260°C et 380°C dans des dispositifs de mélange classiques pour cela, ou **en ce que** les sulfonamides de formule (II) et les mon- ou polyols aliphatiques ou cycloaliphatiques ou leurs dérivés sont dissous ensemble avec les polycarbonates dans des solvants classiques pour des polycarboantes, tels que $CH_2Cl_2$ et/ou le chlorobenzène et les mélanges ainsi obtenus de sulfonamides de formule (II) et des mono- ou polyols aliphatiques ou cydoaliphatiques ou leurs dérivés, sont isolés avec les polycarbonates par évaporation postérieure du solvant d'une manière connue.

**6.** Utilisation des polycarbonates des revendications 1 à 4 pour la préparation d'appareils médicaux ou de parties d'appareils médicaux.